(19) Europäisches Patentamt
European Patent Office
Office européen des brevets

(11) EP 3 088 437 B1

(12) EUROPEAN PATENT SPECIFICATION

(45) Date of publication and mention of the grant of the patent:
**06.02.2019 Bulletin 2019/06**

(21) Application number: **14874361.0**

(22) Date of filing: **24.12.2014**

(51) Int Cl.:
***C08G 63/16*** *(2006.01)* ***C08G 63/78*** *(2006.01)*

(86) International application number:
**PCT/JP2014/084071**

(87) International publication number:
**WO 2015/098926 (02.07.2015 Gazette 2015/26)**

(54) **POLYOXALATE AND METHOD FOR PRODUCING SAME**

POLYOXALAT UND VERFAHREN ZUR HERSTELLUNG DAVON

POLYOXALATE ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2013 JP 2013265883**

(43) Date of publication of application:
**02.11.2016 Bulletin 2016/44**

(73) Proprietor: **Toyo Seikan Group Holdings, Ltd.**
**Shinagawa-ku**
**Tokyo 141-8627 (JP)**

(72) Inventors:
- **YOSHIKAWA, Seishi**
**Yokohama-shi**
**Kanagawa 240-0062 (JP)**
- **YAMADA, Toshiki**
**Yokohama-shi**
**Kanagawa 240-0062 (JP)**

(74) Representative: **J A Kemp**
**14 South Square**
**Gray's Inn**
**London WC1R 5JJ (GB)**

(56) References cited:
**CN-A- 102 718 948** **JP-A- H09 316 181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 088 437 B1

## Description

Technical Field:

This invention relates to polyoxalates. More specifically, the invention relates to polyoxalates that can be favorably used for a dispersion solution for drilling used for extracting underground resources such as petroleum, natural gases and the like relying on an ore chute drilling method such as hydraulic fracturing method or the like method.

Background Art:

Ore chute drilling methods such as hydraulic fracturing method, rotary drilling method and riserless drilling method have now been widely employed for extracting underground resources. The rotary drilling method consists of forming the ore chute by drilling while refluxing the mud and forming a filter cake called mud wall on the wall surfaces of the ore chute using a finishing fluid blended with a water loss-preventing agent. The cake maintains the chute walls stable, prevents the chute walls from collapsing and reduces friction to the fluid flowing through the ore chute.

The hydraulic fracturing method consists of pressurizing the fluid filled in the ore chute to form cracks (fractures) in the vicinities of the ore chute to thereby improve permeability in the vicinities of the ore chute (for easy flow of the fluid) in an attempt to increase the effective sectional area (inflow sectional area) through which the resources such as oils and gases flow into the ore chute and, therefore, in order to improve productivity of the ore chute.

Here, as the water loss-preventing agent that is added to the finishing fluid, there are chiefly used calcium carbonate or various kinds of salts in a granular form. However, use of the water loss-preventing agent brings about such problems that it becomes necessary to conduct a treatment with acid to remove it, or the water loss-preventing agent stays clogged in the stratum from where the resources are to be extracted and hinders the production.

Further, the fluids used in the hydraulic fracturing method are also called fracturing fluids. In the past, a viscous fluid such as jelly gasoline had been used. In recent years, however, as the shale gas or the like gas has now been extracted from the shale layer that exists in relatively shallow places and by taking the effects on the environment into consideration, it is becoming a common practice to use an aqueous dispersion solution obtained by dissolving or dispersing a polymer in water. A known example of the polymer is polylactic acid (see a patent document 1).

That is, the polylactic acid is a substance that exhibits hydrolysable capability and biodegradable capability, and, even if it remains under the ground, is decomposed by water or enzyme in the ground and does not adversely affect the environment. Further, the water that is used as a dispersant, too, is considered to be far from affecting the environment as compared to gasoline or the like.

When the ore chute is filled with the aqueous dispersion solution of the polylactic acid and is pressurized, the polylactic acid permeates to the vicinities of the ore chute. Here, however, the polylactic acid undergoes the hydrolysis and loses the form of the resin. Therefore, spaces (or cracks) form in the portions through where the polylactic acid had been permeated accounting for an increase in the space of the ore chute into where the resources can flow.

Further, the polylactic acid also works as a water loss-preventing agent and suppresses the water used as a dispersion medium from permeating into the ground too much. Therefore, the polylactic acid offers an advantage of minimizing a change in the environment in the stratum. Besides, no treatment with acid is necessary since the polylactic acid decomposes in the ground.

In addition, the lactic acid which is decomposed from the polylactic acid is an organic acid. As the polylactic acid decomposes, the lactic acid is released. The lactic acid corrodes the shale layer and accelerates the shale layer to become porous.

However, though the polylactic acid undergoes the hydrolysis relatively quickly at temperatures of not lower than 100°C, its rate of hydrolysis is small at temperatures of lower than 100°C. If used for extracting, for example, the shale gas from under the ground where the temperature is low, therefore, the efficiency of hydrolysis becomes poor and improvements are desired.

The present inventors have discovered that a polyoxalate can be effectively used to substitute for the polylactic acid and have filed a patent application (patent document 2). The polyoxalate is obtained by the esterification/polymerization such as esterification or ester-interchange reaction of an oxalic acid diester such as dimethyl oxalate and a diol such as ethylene glycol. Like the polylactic acid, the polyoxalate, too, excels in biodegradability, is environmentally friendly and releases acid upon undergoing the hydrolysis. Besides, the polyoxalate is more hydrolysable than the polylactic acid and exhibits highly hydrolyzing property even at low temperatures of not higher than 80°C and, specifically, not higher than 60°C. Therefore, the polyoxalate is very useful for the dispersion solution for drilling, such as the fracturing fluid or the finishing fluid mentioned above.

However, the polyoxalate has such a defect that it easily undergoes the blocking at the time of being pulverized, and is difficult to handle. That is, when the polyoxalate is used for the dispersion solution for drilling, the dispersion solution is prepared at the site of drilling requiring, therefore, the work such as dispersing large amounts of polyoxalate

in water. The polyoxalate, however, easily undergoes the blocking to form masses thereof and, therefore, a laborious work is necessary to homogeneously disperse it in water. Therefore, improvements have been desired.

There have been proposed various methods of producing polyoxalates (e.g., patent documents 3 to 5). However, none of them are paying attention to the crushability. Namely, there has been known no polyoxalate that is capable of preventing itself from undergoing the blocking when it is being crushed yet maintaining hydrolysable capability.

Prior Art Documents:

Patent Documents:

Patent document 1: USP7,833,950
Patent document 2: JP-A-2014-134091
Patent document 3: JP-A-9-59359
Patent document 4: JP-A-6-145283
Patent document 5: Japanese Patent No. 3518954

Outline of the Invention:

Problems that the Invention is to Solve:

It is, therefore, an object of the present invention to provide a polyoxalate which exhibits a highly hydrolysable capability even at temperatures of as low as not higher than 80°C and, specifically, not higher than 60°C, and which can be excellently crushed, i.e., which is capable of effectively preventing itself from undergoing the blocking when it is being crushed.

Means for Solving the Problems:

The present inventors have carried out experiments extensively concerning the polyoxalates and have discovered the fact that the alcohol components remaining in the polyoxalates could cause the blocking. In producing the polyoxalate by the esterification/polymerization reaction of the oxalic acid diester and the dialcohol, therefore, the present inventors have succeeded in obtaining a polyoxalate having improved crushability by carrying out the esterification/polymerization reaction in the absence of a solvent, and by producing the polyoxalate having a high degree of crystallinity by adjusting the conditions for distilling the alcohol components off the polymerization reaction system.

Namely, according to the present invention, there is provided a polyoxalate containing, as a chief constituent unit, a recurring unit represented by the following formula (1):

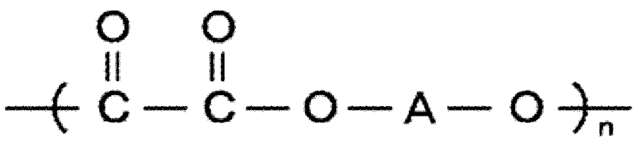
(1)

wherein,

n is a positive number, and
A is a divalent organic group,

and having a quantity of heat of fusion ΔHm of not less than 60 J/g as measured by the DSC in the first time of elevating the temperature and as calculated by the following formula:

$$\Delta Hm = \Delta Hm' - \Delta Hc$$

wherein,

ΔHm' is a quantity of heat of fusion (J/g) inclusive of heat of crystallization while the temperature is being elevated,
ΔHc is a quantity of heat (J/g) generated by the crystallization, and
ΔHm is a quantity of heat of fusion (J/g), permitting the components to be volatilized in an amount of not more than 2.0% by weight when the temperature is elevated up to 200°C as measured by the TGA, and having a 5% weight loss temperature (Td5%) of not higher than 230°C, wherein:
ΔHm' is measured from the area of the endothermic peak of fusion and ΔHc is measured from the area of the exothermic peak of crystallization, when the DSC is carried out in nitrogen atmosphere, by elevating the temperature at a rate of 10°C/min and by measuring over a temperature range of 0 to 250°C; and
the TGA used to measure the amount of components to be volatilized and the weight loss temperature is carried out in nitrogen atmosphere, by elevating the temperature at a rate of 10°C/min and by measuring over a temperature range of 40 to 300°C.

In the polyoxalate of the present invention, it is desired that:

(1) The organic group A is an ethylene glycol residue; and
(2) The recurring unit is contained in an amount of not less than 90 mol%.

A process for producing such a polyoxalate is by the esterification/polymerization reaction of an oxalic acid diester and a dialcohol in the absence of solvent by using a polymerization reactor equipped with a distill-off pipe that has a vertex portion, the process comprising:

executing the esterification/polymerization reaction in the polymerization reactor in two steps of polymerization under normal pressure accompanied by the removal of alcohol from the oxalic acid diester and polymerization under reduced pressure accompanied by the removal of dialcohol following the polymerization under normal pressure, wherein:
in the step of polymerization under normal pressure, the distill-off pipe of from the reactor up to the vertex portion is at least partly maintained at a temperature which is not higher than the boiling point of the alcohol that is distilled off plus 6°C in order to suppress the distillation of the oxalic acid diester; and
the step of polymerization under reduced pressure is executed maintaining the temperature of the reaction solution in the polymerization reactor at 180 to 210°C.

In such a process, it is desired that:

(3) A dimethyl oxalate is used as the oxalic acid diester and an ethylene glycol is used as the dialcohol;
(4) In the step of polymerization under normal pressure, the distill-off pipe of from the reactor up to the vertex portion is at least partly maintained at a temperature which is not higher than the boiling point of the alcohol that is distilled off in order to reflux the alcohol that is formed from the oxalic acid diester and is distilled/condensed;
(5) After the step of polymerization under reduced pressure has been executed, drying is executed under reduced pressure; and
(6) In the step of polymerization under normal pressure, the distill-off pipe of from the reactor up to the vertex portion is at least partly maintained at a temperature which is lower than the boiling point of the alcohol that is distilled off plus 5°C in order to suppress the distillation of the oxalic acid diester.

Effects of the Invention:

As will be understood from the recurring unit represented by the above formula (1), the polyoxalate of the present invention has a polyester structure derived from an oxalic acid diester (e.g., dimethyl oxalate) and a dialcohol (e.g., ethylene glycol). Further, the polyoxalate of the present invention assumes the form of a crystalline powder having an enthalpy of fusion of as large as not less than 60 J/g. Besides, the polyoxalate of the invention permits the components to be volatilized in an amount of not more than 2.0% by weight at 200°C as calculated from the TGA measurement of the polyoxalate, and contains the alcohol that is by-produced by the reaction and the unreacted diol (e.g., ethylene glycol) in very suppressed amounts. Moreover, the polyoxalate of the invention has a 5% weight loss temperature (Td5%) of as low as not higher than 230°C and contains low-molecular-weight components in certain amounts. Owing to the above features, the polyoxalate of the present invention not only maintains a highly hydrolysable capability but also exhibits excellent crushability effectively preventing itself from undergoing the blocking when it is being crushed and is easy to handle. Therefore, the polyoxalate of the invention can be effectively used at the site of extraction for preparing a dispersion solution for drilling underground resources.

Brief Description of the Drawings:

[Fig. 1] is a diagram schematically illustrating the structure of a reaction apparatus used for a production process to obtain the polyoxalate of the present invention.

[Fig. 2] is a graph illustrating a relationship between the temperature at the vertex portion A of a distill-off pipe 5 and the concentration of the dimethyl oxalate (DMO) in the initial distillate in a preliminary experiment.

[Fig. 3] is a graph showing a temperature hysteresis of a reaction solution and a temperature hysteresis at the vertex portion in the polymerization under normal pressure in Example 1.

[Fig. 4] is a graph showing a temperature hysteresis of a reaction solution and a temperature hysteresis at the vertex portion in the polymerization under reduced pressure in Example 1.

[Fig. 5] is a graph showing a temperature hysteresis of a reaction solution and a temperature hysteresis at the vertex portion in the polymerization under reduced pressure in Example 3.

Modes for Carrying Out the Invention:

<Polyoxalates>

The polyoxalate of the present invention contains, as a chief constituent unit, a recurring unit represented by the following formula (1):

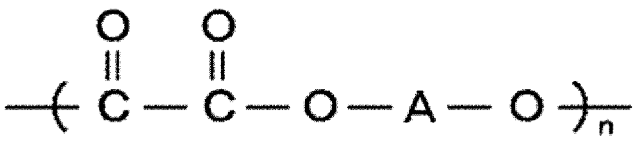

(1)

wherein,

n is a positive number, and
A is a divalent organic group.

The divalent organic group A is an organic residue stemming from the dialcohol that forms an ester with the oxalic acid diester. As the oxalic acid diester, there can be preferably used a dialkyl oxalate and, more preferably, a dialkyl oxalate comprising alkyl groups having 1 to 4 carbon atoms, such as dimethyl oxalate, diethyl oxalate or propyl oxalate and, particularly preferably, the dimethyl oxalate or the diethyl oxalate. As the dialcohol, on the other hand, there can be exemplified ethylene glycol, propylene glycol, butane diol, hexane diol, octane diol, dodecane diol, neopentyl glycol, bisphenol A and cyclohexane dimethanol and, preferably, a straight-chain divalent alcohol such as ethylene glycol, propylene glycol, butane diol, hexane diol, octane diol and dodecane diol and, particularly, preferably, an ethylene glycol.

Further, the polyoxalate of the present invention has a quantity of heat of fusion $\Delta Hm$ of not less than 60 J/g and, specifically, not less than 70 J/g as measured by the DSC in the first time of elevating the temperature and as calculated by the following formula:

$$\Delta Hm = \Delta Hm' - \Delta Hc$$

wherein,

$\Delta Hm'$ is a quantity of heat of fusion (J/g) inclusive of heat of crystallization while the temperature is being elevated,
$\Delta Hc$ is a quantity of heat (J/g) generated by the crystallization, and
$\Delta Hm$ is a quantity of heat of fusion (J/g).

When the temperature is elevated in the first time by the DSC, there are detected an exothermic peak due to the crystallization depending on the degree of crystallization of the polyoxalate that is to be measured and an endothermic peak of fusion inclusive of the heat of crystallization while the temperature is being elevated. That is, when the polyoxalate

has been completely crystallized, there is detected no exothermic peak due to the crystallization. When the polyoxalate has not been crystallized at all, on the other hand, the quantity of heat generated by the crystallization becomes maximal and the greatest peak is detected. Here, in general, the degree of crystallization is calculated by dividing a difference $\Delta$Hm between the quantity of heat of fusion $\Delta$Hm' calculated from a peak area of the endothermic peak of fusion and the quantity of heat $\Delta$Hc generated by the crystallization calculated from a peak area of the exothermic peak due to the crystallization, by the quantity of heat of fusion (constant) of when the polyoxalate is crystallized by 100%. In this case, the constant has not been known and the degree of crystallization itself cannot be calculated. However, the larger the value of $\Delta$Hm, the larger the degree of crystallization of the polyoxalate.

The fact that the polyoxalate of the present invention has the quantity of heat of fusion $\Delta$Hm (hereinafter often called DSC crystallization degree) within the above numerical range means that the so-called comonomer is contained in a small amount, the recurring unit represented by the above formula (1) is contained in an amount of not less than 90 mol% and, specifically, not less than 95 mol% and, further, that the divalent organic group A is stemming from a single dialcohol. In other words, the polyoxalate of the present invention may contain ester units other than the oxalic acid diester as well as a plurality of kinds of divalent organic groups A, but is formed on condition that it contains the same recurring unit at a ratio in a range of not less than 90 mol% and, specifically, not less than 95 mol%. If there are contained other ester units and many kinds of divalent organic groups A, then it becomes difficult to attain the crystallization, and the quantity of heat of fusion $\Delta$Hm mentioned above will not be possessed.

The polyoxalate of the present invention has, for example, a glass transition point (Tg) of as low as about 20 to 50°C but has a large quantity of heat of fusion $\Delta$Hm as described above. As demonstrated in Examples appearing later, therefore, the polyoxalate can be easily crushed into a powder without undergoing the blocking.

Furthermore, the polyoxalate of the present invention permits the components to be volatilized in an amount of not more than 2.0% by weight and, specifically, no more than 1.8% by weight at 200°C as calculated from the TGA measurement, and has a 5% weight loss temperature (Td5%) of not higher than 230°C and, specifically, as low as 220 to 230°C.

As described above, the small amounts of the components that volatilize at 200°C mean that the methyl alcohol by-produced by the reaction and the unreacted diol (e.g., ethylene glycol) are contained in very suppressed amounts. The weight loss temperature Td5% that is low means that the low-molecular-weight components are contained in relatively large amounts. As a result, the polyoxalate of the invention has a weight average molecular weight (Mw), calculated as the poly(methyl methacrylate), of, preferably, not more than 100,000, more preferably, 20,000 to 90,000, very preferably, 20,000 to 70,000 and, most preferably, 20,000 to 40,000, and has a melting point (mp), preferably, in a range of 150 to 190°C. In addition to having the DSC crystallization degree mentioned above, the polyoxalate of the invention permits components to volatilize in small amounts at 200°C and, further, has a low Td5% accounting for high crushability.

The polyoxalate of the present invention described above has excellent hydrolysable capability. Namely, the acid released from the polyoxalate of the invention produces a pH (25°C) of not more than 3 in an aqueous dispersion solution thereof at a concentration of 0.005 g/ml; i.e., when mixed with water, the polyoxalate undergoes the hydrolysis and releases oxalic acid. The oxalic acid serves as a hydrolyzing catalyst and accelerates further the hydrolysis. Therefore, the polyoxalate of the invention exhibits hydrolysable capability very higher than those of the polylactic acid or the polyglycolic acid, and exhibits very high degree of hydrolysable capability even at low temperature regions of not higher than 80°C and, further, not higher than 60°C.

Besides, the polyoxalate of the present invention contains low-molecular-weight components in suitable amounts. Therefore, the polyoxalate exhibits excellent hydrolysable capability at low temperatures yet does not undergo the hydrolysis at a rapid rate, i.e., is suppressed from being hydrolyzed for a certain period of time. In hot water of, for example, about 70°C, the hydrolysis takes place after about 3 hours have passed. Therefore, if used for the dispersion solution for drilling, the polyoxalate of the invention maintains the function required for the polymer for a certain period of time and, thereafter, undergoes the hydrolysis and extinguishes. If the contents of the low-molecular-weight components are small and the average molecular weight of the polyoxalate is unnecessarily large, then the hydrolysable capability is impaired at low temperatures. If the contents of the low-molecular-weight components are too large, the hydrolysis undergoes at a rapid rate and the polyoxalate cannot be favorably used for the dispersion solution for drilling.

The polyoxalate of the present invention can be used being blended, as required, with known additives such as plasticizer, heat stabilizer, photo stabilizer, antioxidant, ultraviolet-ray absorber, flame retarder, coloring agent, pigment, filler, parting agent, antistatic agent, perfume, lubricant, foaming agent, anti-bacterial·anti-fungal agent, nucleating agent, lamellar silicate, terminal group-sealing agent, crosslinking agent, enzyme and the like. As required, further, the poloxalate can be used being composited with other biodegradable resins such as aliphatic polyester, polyvinyl alcohol (PVA) and celluloses.

<Production of the polyoxalates>

The polyoxalate of the present invention can be produced by the esterification/polymerization reaction of an

oxalic acid diester and a dialcohol, based on the esterification or the interchange of esters, without using solvent. The esterification/polymerization reaction is executed without using the solvent in order to prevent the polyoxalate that is formed from being mixed with the solvent. If the solvent mixes, it becomes difficult to suppress the amounts of the volatile components to lie within small ranges (not more than 2.0% by weight) mentioned above, and crushability decreases.

The dialcohol to be reacted with the oxalic acid diester corresponds to the divalent organic group A in the recurring unit of the above formula (1). Use of the dialcohol makes it possible to obtain the polyoxalate having a high degree of DSC crystallinity. As described earlier, the ethylene glycol is most desirably used as the dialcohol.

In the above esterification/polymerization reaction, a catalyst can be used as required. There can be used any known catalysts such as titanium alkoxides like titanium tetrabutoxide, antimony compounds like antimony trioxide, and tin compounds such as butyltin dilaurate. In addition to the above, there can be, further, exemplified compounds of P, Ge, Zn, Fe, Mn, Co, Zr, V and various rare earth metals.

The esterification/polymerization reaction is carried out in two steps of polymerization under normal pressure and polymerization under reduced pressure. These polymerization reactions must be executed by using a batchwise polymerization reactor shown in Fig. 1.

Referring to Fig. 1, the polymerization reactor 1 includes a stirrer 3 and a distill-off pipe 5. The distill-off pipe 5 has a vertex portion A, a refluxing portion 5a in a region of from the reactor 1 up to the vertex portion A, and a distill-off portion 5b on the downstream of the vertex portion A. The distill-off portion 5b is provided with a cooling pipe 5c such as heat exchanger so that the liquid that is distilled off is quickly condensed and is drained. The refluxing portion 5a, too, may be provided with a suitable heating pipe or a cooling pipe to adjust the temperature of the vertex portion A.

A reaction solution 10 (above-mentioned oxalic acid diester, dialcohol and, as required, catalyst) is fed into the reactor 1. The alcohol by-produced in the esterification/polymerization reaction and the unreacted dialcohol or the oligomer are distilled off as a distillate 15 from the distill-off portion 5b through the refluxing portion 5a of the distill-off pipe 5. The esterification/polymerization reaction is carried out in two steps while adjusting the distillation conditions.

1. Polymerization under normal pressure.

The polymerization under normal pressure is executed by purging the interior of the reactor 1 with a nitrogen gas atmosphere, and heating the reaction solution 10 fed into the reactor 1 by a heater at a temperature in a range of 110 to 200°C with stirring. Through the polymerization under normal pressure, the alcohol is removed from the oxalic acid diester, and the polymerization proceeds due to the esterification with the dialcohol. As a result, there is obtained a polyoxalate of a low degree of polymerization represented by the following formula (2a),

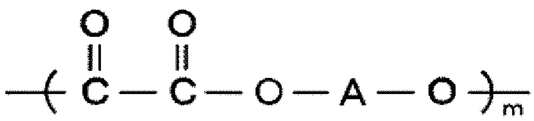

(2 a)

For example, the polyoxalate of the low degree of polymerization obtained by using an ethylene glycol as the dialcohol is represented by the following formula (2b),

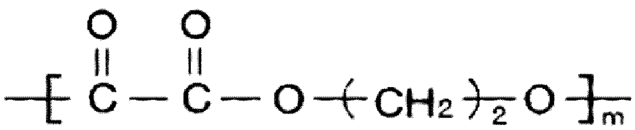

(2 b)

wherein in the formulas (2a) and (2b),

A is a divalent organic residue stemming from the dialcohol (OH-A-OH), and
m is a positive number representing the degree of polymerization.

If the reaction temperature is too high, the polyoxalate that is formed may decompose. If the reaction temperature is too low, the rate of reaction becomes so low that the polymerization may not be efficiently executed.

It is desired that the amount of the dialcohol in the reaction solution 10 that is fed is 0.8 to 1.2 moles per mole of the oxalic acid diester, i.e., is in an excess amount relative to the oxalic acid diester from the standpoint of quickly executing the polymerization reaction under normal pressure.

In the polymerization under normal pressure, it is important that the refluxing portion 5a of the distill-off pipe 5

is maintained at a temperature not higher than the boiling point of the alcohol that is distilled off plus 6°C, preferably, not higher than the above boiling point plus 5°C and, very preferably, lower than the above boiling point plus 5°C. That is, in the above step, as the reaction solution is heated at the above reaction temperature, the alcohol separates away from the oxalic acid diester and is distilled off passing through the distill-off pipe 5. Here, if the temperature at the refluxing portion 5a is too high, then the oxalic acid diester, too, is distilled off together with the alcohol. The distillation of the oxalic acid diester causes not only a decrease in the yield of the polyoxalate that is obtained but also a decrease in the molecular weight thereof. Therefore, the refluxing portion 5a is maintained at a temperature that is not higher than the boiling point of the alcohol that is distilled off plus 6°C, preferably, not higher than the above boiling point plus 5°C and, very preferably, lower than the above boiling point plus 5°C in order to reflux the distillate that contains the oxalic acid diester while permitting the by-produced alcohol to be distilled off as a distillate 15.

When the distillation conditions are adjusted as described above, further, it is desired in the initial stage of the reaction that the reaction is executed by maintaining the temperature of the refluxing portion 5a of the distill-off pipe 5 at not higher than the boiling point of the alcohol or, in the case of, for example, methanol, at not higher than 64.7°C (boiling point thereof) while refluxing the alcohol such as methanol that is formed. Thereafter, it is desired that the temperature of the refluxing portion 5a is maintained at not higher than the boiling point of the methanol plus 6°C, preferably, not higher than the above boiling point plus 5°C and, very preferably, lower than the above boiling point plus 5°C. This makes it possible to reflux the dimethyl oxalate dissolved in the by-produced methanol, to return the dimethyl oxalate into the reaction system and, therefore, to utilize the dimethyl oxalate to improve the reaction efficiency.

At a moment when the alcohol has ceased to be distilled/condensed while executing the polymerization under normal pressure as described above, the polymerization under reduced pressure is then executed next.

2. Polymerization under reduced pressure.

The polymerization under reduced pressure is executed by reducing and maintaining the pressure in the reactor 1 down to 0.1 to 1 kPa and maintaining the reaction solution 10 containing the polyoxalate formed by the polymerization under normal pressure at 180 to 210°C. Through the polymerization under reduced pressure, the reaction further proceeds due to the esterification while removing the dialcohol (e.g., ethylene glycol) that remains in the reaction solution 10 to thereby obtain a polyoxalate having a higher molecular weight.

The polyoxalate having the higher molecular weight is represented by the following formula (3a).

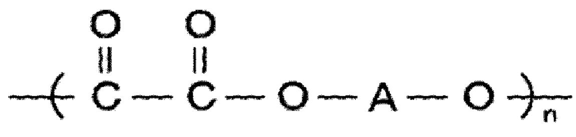

(3 a)

As will be understood from the above formula (3a), the polyoxalate that is obtained when the ethylene glycol is used as the dialcohol is represented by the following formula (3b).

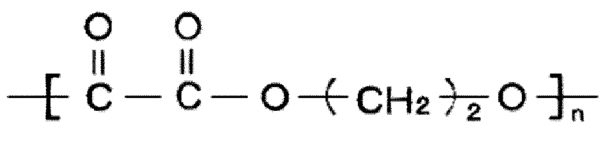

(3 b)

wherein in the formulas (3a) and (3b),
A is an organic residue stemming from the dialcohol, and n is a positive number representing the degree of polymerization and is a number larger than the number m in the formulas (2a) and (2b).

In the polymerization under reduced pressure, if the temperature of the reaction solution is lower than 180°C, it is not possible to attain an increase in the molecular weight and, therefore, the obtained polyoxalate tends to be hydrolyzed to an excess degree. When, for example, mixed into water, the polyoxalate undergoes the hydrolysis at one time and can no longer be used for the dispersion solution for drilling. If the temperature of the reaction solution exceeds 210°C, on the other hand, the polyoxalate that is formed undergoes the decomposition.

By executing the polymerization under reduced pressure following the polymerization under normal pressure as described above, it is made possible to obtain the polyoxalate having a large quantity of heat of fusion, suppressing the content of alcohol formed from the oxalic acid diester, and suppressing the content of the ethylene glycol and oligomer owing to the polymerization under reduced pressure and, as a result, permitting the components to be volatilized in amounts of not more than 2.0% by weight when heated up to 200°C. Further, by executing the polymerization under

reduced pressure while removing the ethylene glycol, it is allowed to increase the amounts of the low-molecular-weight components to some extent and to lower the Td5% to be not higher than 230°C.

In the step of polymerization under reduced pressure, it is desired that the refluxing portion 5a of the distill-off pipe 5 is maintained at a temperature of 90 to 140°C. With the refluxing portion 5a being maintained at the above temperature, removal of the ethylene glycol is accelerated and the amount of the volatile components can be further decreased.

The step of polymerization under reduced pressure may be discontinued when the removal of the ethylene glycol is discontinued. For instance, the temperature at the vertex portion A of the distill-off pipe 5 is monitored, and the polymerization may be discontinued at a moment when the temperature becomes not higher than 80°C. The yield may decrease as the time of polymerization under reduced pressure is lengthened. Therefore, the time for taking out the polyoxalate can be quickened depending on the temperature that is monitored. The obtained polyoxalate is taken out from the reactor 1, crushed down into a predetermined grain size by a crusher, and is put to use.

3. After-step.

After the step of polymerization under reduced pressure, it is desired that the polyoxalate that is suitably crushed down is dried under reduced pressure. Through the drying under reduced pressure, the ethylene glycol contained in a small amount in the polyoxalate is removed therefrom, and the amount of the components that volatilize can be further decreased.

It is desired that the drying under reduced pressure is carried out in vacuum of not higher than 10 kPa being heated at 100 to 150°C. The dying under reduced pressure of the above condition creates the solid-phase polymerization based on the ester interchange and helps further increase the molecular weight of the polyoxalate as well as the crystallization thereof. As a result, there is obtained the polyoxalate having a large quantity of heat of fusion, i.e., a higher degree of crystallization. Usually, the drying under reduced pressure may be carried out for 1 to 5 hours if it is aimed at attaining the crystallization. If it is aimed at executing the solid-phase polymerization in addition to attaining the crystallization, then the drying may be executed under further reduced pressure (e.g., 1 kPa or lower) for 10 to 20 hours.

<Use of the polyoxalates>

The thus obtained polyoxalate of the present invention hydrolyzes excellently at low temperatures, i.e., hydrolyzes effectively at not higher than 80°C and, specifically, at not higher than 60°C and is, besides, suppressed from undergoing the hydrolysis at a rapid rate. Even when dispersed in a medium such as water, the polyoxalate of the invention does not start decomposing for a certain period of time but remains in the state of a polymer. The polyoxalate, further, has excellent crushability. When a mass of the polyoxalate obtained by the reaction is crushed, the crushed powder does not easily undergo the blocking and can, therefore, be easily dispersed in water or the like. Therefore, the polyoxalate of the present invention can be very suitably used for a dispersion solution for drilling underground resources.

For instance, when the dispersion solution obtained by dispersing the polyoxalate of the present invention in water is introduced with pressure into under the ground, the polyoxalate of the invention undergoes the hydrolysis at a temperature of 40 to 80°C after the passage of a certain period of time. Due to the hydraulic fracturing by using the dispersion solution as the fracturing fluid, therefore, it is allowed to drill the desired underground resources.

## EXAMPLES

The invention will now be described by way of the following Examples. Here, measurements were taken by the methods described below.

<Measuring the melting points, glass transition temperatures and ΔHm>

Oxalates obtained in Examples were pelletized, subjected to the differential scanning calorimetric analysis under the condition described below, and their values of during the fast scanning were recorded.

Apparatus: DSC 6220 (differential scanning calorimeter) manufactured by Seiko Instruments Inc.

Preparation of samples: Amounts of samples, 5 to 10 mg.

Measuring conditions: Nitrogen atmosphere, elevating the temperature at a rate of 10°C/min. and measuring over a range of 0 to 250°C.

ΔHm' {Quantity of heat of fusion (J/g) inclusive of heat of crystallization while the temperature was elevated} was found from the area of endothermic peak of fusion, ΔHc {quantity of heat (J/g) generated by the crystallization} was found from the area of exothermic peak of crystallization, and melting point was found from the peak top. Further, ΔHm (DSC crystallization degree) was calculated from ΔHm' and ΔHc.

<Molecular weights in Examples 1 to 7>

Five mL of a solvent was added to about 1.5 mg of a sample obtained in each of the Examples 1 to 7, and the mixture thereof was mildly stirred at room temperature (sample concentration of about 0.03%). After having confirmed with the naked eye that the sample had been dissolved, the solvent was filtered using a 0.45 $\mu$m filter. All samples were measured for their molecular weights within about one hour from the start of preparation under the following conditions. A poly(methyl methacrylate) was used as the standard.
Apparatus: Gel permeation chromatograph GPC
Detector: Differential refractive index detector RI
Column: Shodex HFIP-LG (one unit), HFIP-806M (2 units), manufactured by SHOWA DENKO K.K.
Solvent: Hexafluoroisopropanol (5 mM sodium trifluoroacetate was added)
Flow rate: 0.5 mL/min.
Column temperature: 40°C

<Molecular weight in Example 8]

Three mL of a solvent was added to about 10 mg of a sample obtained in the Example 8, and the mixture thereof was mildly stirred at room temperature. After having confirmed with the naked eye that the sample had been dissolved, the solvent was filtered using a 0.45 $\mu$m filter. All samples were measured for their molecular weights within about one hour from the start of preparation under the following conditions. A polystyrene was used as the standard.
Apparatus: HLC-8120 manufactured by TOSOH CORPORATION
Detector: Differential refractive index detector RI
Column: TSKgel Super HM-Hx2 and TSKguard column Super H-H as a guard column
Solvent: Chloroform
Flow rate: 0.5 mL/min.
Column temperature: 40°C

<Amount of volatile components, 5% weight loss temperature (Td5%) >

The polyoxalates obtained in the Examples were measured for their TGA under the following conditions.
Apparatus: TG/DTA 7220 manufactured by Hitachi High-Tech Science Corporation.
Preparation of samples: Amounts of samples, 5 to 10 mg.
Measuring conditions: Nitrogen atmosphere, elevating the temperature at a rate of 10°C/min. and measuring over a range of 40 to 300°C.
The amount of the components volatilized was found according to the following formula.

$$\text{Amount of the components volatilized} = [(\text{initial weight} - \text{weight at } 200^\circ\text{C})/\text{initial weight}] \times 100$$

Td5% was a temperature of when the weight of the sample has decreased by 5% with respect to the initial weight.

<Crushability at normal temperature>

The samples obtained in the Examples each in an amount of 1.5 g were crushed at normal temperature (20°C) for 3 minutes by using a crusher IMF-800DG manufactured by Iwatani Corporation The obtained powders were evaluated to be "good" when they were not in the state of being blocked and were evaluated to be "bad" when they were obviously in the state of being coagulated and blocked.

<Hydrolysable capability>

Ten mg of the sample (powder) obtained in each of the Examples and 10 ml of distilled water were put into a 25-ml vial which was then stored still in an oven heated at 70°C. After stored for 3 hours, the sample was taken out from the vial and the concentration of oxalic acid in the solution was determined by the HPLC, and the decomposition ratio was calculated.
Apparatus: GULLIVER Series manufactured by JASCO Corporation.
Column: Atlantis $dC_{18}$ 5$\mu$m, 4.6 x 250 mm, manufactured by Waters.
Wavelength for detection: UV absorption, 210 nm

Solvent: The 0.5% phosphoric acid solution and methanol flow in a graduated way whereby the 0.5% phosphoric acid was gradually supplanted with the methanol.

Flow rate, 1 mL/min.

Measuring temperature: 40°C

The samples were evaluated to be "good" when their decomposition ratios after 3 hours were less than 20% and were evaluated to be "bad" when their decomposition ratios after 3 hours were not less than 20%.

<Preliminary Experiment>

Polymerization of polyoxalate (PEOx);

Into a reactor 1 (1L separable flask) of the structure shown in Fig. 1 equipped with a mantle heater, a thermometer for measuring the liquid temperature, a stirrer, a nitrogen introduction tube and a distill-off pipe 5, there were introduced:

dimethyl oxalate, 472 g (4 moles),
ethylene glycol, 297 g (4.8 moles), and
antimony trioxide, 0.17 g,

and the temperature in the flask was elevated in a nitrogen stream up to 120°C while monitoring the temperature at the vertex portion A of the distill-off pipe 5 to conduct the reaction under normal pressure. Concretely, after the methanol started distilling off, the liquid temperature was elevated little by little up to 200°C to execute the polymerization under normal pressure. Finally, there was obtained 260 ml of a distillate. Thereafter, the liquid temperature in the flask was maintained at 200°C, the pressure was maintained reduced at 0.1 to 0.8 kPa, and the polymerization under reduced pressure was executed while monitoring the temperature at the vertex portion A of the distill-off pipe 5. The obtained polymer was taken out, granulated by using the crusher, and was heat-treated in vacuum at 120°C for 2 hours (drying under reduced pressure) so as to be crystallized.

The concentration of the dimethyl oxalate (DMO) in the initial distillate was measured by using the GCMS under the following conditions.

Apparatus: GCMS-QP2010 manufactured by Shimadzu Corporation.

Column: RXi-5ms manufactured by Restek Corporation.

Measuring conditions: The temperature in the column oven was maintained at 40°C for 2 minutes and was, thereafter, elevated up to 80°C at a rate of 8°C/min. and was then elevated up to 250°C at a rate of 15°C/min.

Fig. 2 is a graph illustrating a relationship between the temperature at the vertex portion A of the distill-off pipe 5 and the concentration of the dimethyl oxalate (DMO) in the initial distillate. From Fig. 2, it was learned that at a vapor temperature of not higher than 70°C, the dimethyl oxalate was prevented from boiling and its distillation could be suppressed.

<Example 1>

Based on the results of the preliminary experiment, the polymerization was executed under normal pressure in the same manner as in the preliminary experiment while maintaining the temperature to be not higher than 70°C at all times at the vertex portion A that was continuous to the refluxing portion 5a of the distill-off pipe 5. Fig. 3 shows a temperature hysteresis of the reaction solution in the polymerization under normal pressure and a temperature hysteresis at the vertex portion A of the distill-off pipe 5. The polymerization under reduced pressure was halted at a moment when the temperature at the vertex portion A was lowered down to about 30°C, and was switched to the polymerization under reduced pressure like that in the preliminary experiment. Fig. 4 shows a temperature hysteresis of the reaction solution in the polymerization under reduced pressure and a temperature hysteresis at the vertex portion A. The temperature at the vertex portion A was elevated to about 140°C, then lowered down to about 80°C, elevated again to about 140°C and was lowered down to about 50°C and maintained stable. At this moment, the polymerization under reduced pressure was discontinued. The obtained polyoxalate was taken out from the reactor (flask), granulated by using the crusher, and was heat-treated in vacuum at 120°C for 2 hours (drying under reduced pressure) so as to be crystallized.

The obtained polyoxalate possessed a weight average molecular weight (Mw) of 70,000, a melting point of 180°C, a glass transition temperature of 35°C, and its yield was 50%. The measured results were as shown in Table 1.

<Example 2>

Methanol was refluxed into the reactor by maintaining the temperature at the vertex portion A to be not higher than the boiling point of methanol for 10 minutes. Thereafter, the polymerization was executed under normal pressure

in the same manner as in the preliminary experiment but maintaining, at all times, the temperature at the vertex portion A to be not higher than 70°C, which was not higher than the boiling point of methanol that was alcohol to be distilled off plus 6°C and, specifically, which was lower than the above boiling point plus 5°C. Next, the polymerization was executed under reduced pressure in the same manner as in Example 1. The obtained polyoxalate was taken out from the reactor, granulated by using the crusher, and was heat-treated in vacuum at 120°C for 2 hours so as to be crystallized.

The obtained polyoxalate possessed a weight average molecular weight (Mw) of 70,000, a melting point of 180°C, a glass transition temperature of 35°C, and its yield was 60%. The measured results were as shown in Table 1.

<Example 3>

The polymerization was executed under normal pressure in the same manner as in Example 1 but using 0.24 ml of dibutyltin dilaurate as the catalyst. Next, the polymerization was executed under reduced pressure like in Example 1. Fig. 5 shows a temperature hysteresis of the reaction solution in the polymerization under reduced pressure and a temperature hysteresis at the vertex portion A. After the temperature at the vertex portion A has reached about 120°C, the polymerization under reduced pressure was discontinued at a moment when the temperature there has dropped down to about 60°C. The obtained polyoxalate was taken out from the reactor (flask), granulated by using the crusher, and was heat-treated in vacuum at 120°C for 2 hours (drying under reduced pressure) so as to be crystallized. The reaction was, further, executed in solid phase at 120°C for 14 hours under a pressure reduced down to 0.1 kPa.

The obtained polyoxalate possessed a weight average molecular weight (Mw) of 31,000, a melting point of 180°C, a glass transition temperature of 35°C, and its yield was 78%. The measured results were as shown in Table 1.

<Example 4>

The polymerization was executed under normal pressure in the same manner as in the preliminary experiment but adjusting the temperature at the vertex portion A to be not higher than 70°C at all times. Next, the polymerization was executed under reduced pressure like in the preliminary experiment without controlling the temperature at the vertex portion A. The polymerization under reduced pressure was discontinued at a moment when the temperature at the vertex portion A has dropped down to 90°C. The obtained polyoxalate was taken out from the reactor (flask), granulated by using the crusher, and was heat-treated in vacuum at 120°C for 2 hours (drying under reduced pressure) so as to be crystallized. The reaction was, further, executed in solid phase at 120°C for 14 hours under a pressure reduced down to 0.1 kPa.

The obtained polyoxalate possessed a weight average molecular weight (Mw) of 44,000, a melting point of 180°C, and a glass transition temperature of 35°C. The measured results were as shown in Table 1.

<Reference Example 5>

A polyoxalate was obtained in the same manner as in Example 4 but without executing the polymerization in solid phase.

The obtained polyoxalate possessed a weight average molecular weight (Mw) of 43,000, a melting point of 167°C, and a glass transition temperature of 35°C. The measured results were as shown in Table 1.

<Reference Example 6>

The polymerization was executed under normal pressure in the same manner as in the preliminary experiment while maintaining the temperature of the vertex portion A at 110°C. The dimethyl oxalate has boiled to an excess degree, the vertex portion A was clogged, and the reaction could not be executed as desired.

<Reference Example 7>

The polymerization was executed under normal pressure in the same manner as in the preliminary experiment but adjusting the temperature of the vertex portion A to be not higher than 70°C at all times. Next, after the polymerization has been executed under normal pressure, the obtained polyoxalate was added into methanol, and the precipitate was recovered by filtration. The precipitate was granulated by using the crusher, and was heat-treated in vacuum at 120°C for 2 hours (drying under reduced pressure) so as to be crystallized.

The obtained polyoxalate possessed a weight average molecular weight (Mw) of 2,000, a melting point of 148°C, and a glass transition temperature of 35°C. The measured results were as shown in Table 1.

<Reference Example 8>

A polyoxalate was obtained in the same manner as in Example 1 but using 0.9 moles of dimethyl oxalate, 0.1 moles of dimethyl terephthalate and 1.2 moles of ethylene glycol as the monomers, and using 0.2 g of a tetrabutyl titanate as the catalyst.

The obtained polyoxalate possessed a weight average molecular weight (Mw) of 10,000 and a glass transition temperature of 42°C. The measured results were as shown in Table 1.

Table 1

| | Norm. pressure polymerization, temp. at vertex A controlled (70 ° C or lower) | *1 | *2 | Mw | *3 | *4 | Td5% (°C) | *5 | Hydrolisablity |
|---|---|---|---|---|---|---|---|---|---|
| Ex. 1 | yes | yes | no | 70,000 | 71 | 1.4 | 230 | good | good |
| Ex. 2 | yes (with reflux) | yes | no | 70,000 | 75 | 1.4 | 230 | good | good |
| Ex. 3 | yes | yes | yes | 31,000 | 82 | 1.9 | 220 | good | good |
| Ex. 4 | yes | no | yes | 44,000 | 90 | 1.4 | 226 | good | good |
| Ref Ex. 5 | yes | no | no | 43,000 | 59 | 2.4 | 221 | bad | good |
| Ref Ex. 6 | no | - | no | - | - | - | - | - | - |
| Ref Ex. 7 | yes | - | no | 2,000 | 25.2 | 7 | 190 | bad | bad |
| Ref Ex. 8 | yes | yes | no | 10,000 | 0 | - | - | bad | - |

*1: Reduced pressure polymerization, temp. at vertex A, controlled (110-145°C)

*2: Solid-phase polymerization

*3: DSC crystallization (J/g)

*4: Amount of components volatilized at 200°C (%)

*5: Norm. temp. crushability

Description of Reference Numerals:

1: polymerization reactor
3: stirrer
5: distill-off pipe
5a: refluxing portion
5b: distill-off portion
A: vertex portion
10: reaction solution
15: distillate

## Claims

1. A polyoxalate containing, as a chief constituent unit, a recurring unit represented by the following formula (1):

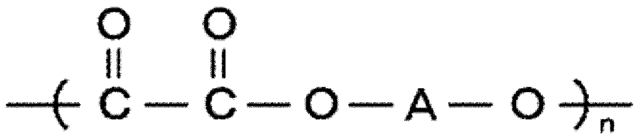

(1)

wherein,

n is a positive number, and
A is a divalent organic group,

and having a quantity of heat of fusion $\Delta Hm$ of not less than 60 J/g as measured by the DSC in the first time of elevating the temperature and as calculated by the following formula:

$$\Delta Hm = \Delta Hm' - \Delta Hc$$

wherein,

$\Delta Hm'$ is a quantity of heat of fusion (J/g) inclusive of heat of crystallization while the temperature is being elevated,
$\Delta Hc$ is a quantity of heat (J/g) generated by the crystallization, and
$\Delta Hm$ is a quantity of heat of fusion (J/g), permitting the components to be volatilized in an amount of not more than 2.0% by weight when the temperature is elevated up to 200°C as measured by the TGA, and having a 5% weight loss temperature (Td5%) of not higher than 230°C, wherein:

$\Delta Hm'$ is measured from the area of the endothermic peak of fusion and $\Delta Hc$ is measured from the area of the exothermic peak of crystallization, when the DSC is carried out in nitrogen atmosphere, by elevating the temperature at a rate of 10°C/min and by measuring over a temperature range of 0 to 250°C; and
the TGA used to measure the amount of components to be volatilized and the weight loss temperature is carried out in nitrogen atmosphere, by elevating the temperature at a rate of 10°C/min and by measuring over a temperature range of 40 to 300°C.

2. The polyoxalate according to claim 1, wherein the organic group A in the recurring unit is an ethylene glycol residue.

3. The polyoxalate according to claim 1, wherein the recurring unit is contained in an amount of not less than 90 mol%.

**Patentansprüche**

1. Polyoxalat, das als Hauptbestandteil eine sich wiederholende Einheit beinhaltet, die durch die folgende Formel (1) dargestellt ist:

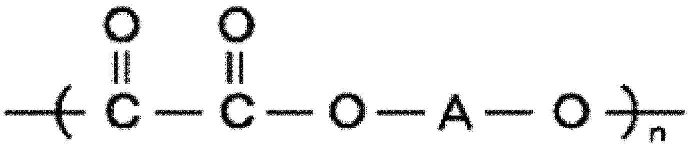
(1)

wobei

n eine positive Zahl ist, und
A eine zweiwertige organische Gruppe ist,

und eine Schmelzwärmemenge ΔHm von nicht weniger als 60 J/g aufweist, gemessen durch die DSC beim ersten Mal einer Erhöhung der Temperatur, und wie es durch die folgende Formel berechnet wird:

$$\Delta Hm = \Delta Hm' - \Delta Hc$$

wobei

ΔHm' eine Menge an Schmelzwärme (J/g) einschließlich Kristallisationswärme ist, während die Temperatur erhöht wird,
ΔHc eine Wärmemenge (J/g) ist, die durch die Kristallisation entsteht, und
ΔHm eine Menge von Schmelzwärme (J/g) ist, den Komponenten ermöglicht wird, in einer Menge von nicht mehr als 2,0 Gewichtsprozent zu verflüchtigen, wenn die Temperatur auf 200 °C erhöht wird, wie gemessen durch die TGA, und mit einer 5 % Gewichts-Verlusttemperatur (Td5%) von nicht mehr als 230 °C, wobei:

ΔHm' von der Fläche des endothermen Schmelzpeaks gemessen wird, und ΔHc von der Fläche des exothermen Kristallisationspeaks gemessen wird, wenn die DSC in Stickstoffatmosphäre durchgeführt wird, durch Erhöhen der Temperatur mit einer Rate von 10 °C/Min. und durch Messen über einen Temperaturbereich von 0 bis 250 °C; und
die TGA verwendet wird, um die Menge der zu verflüchtigenden Komponenten zu messen, und die Gewichtsverlusttemperatur in Stickstoffatmosphäre durchgeführt wird, indem die Temperatur mit einer Rate von 10 °C/Min. und durch Messen über einen Temperaturbereich von 40 bis 300 °C erhöht wird.

2. Polyoxalat nach Anspruch 1, wobei die organische Gruppe A in der sich wiederholenden Einheit ein Ethylenglykol-Rest ist.

3. Polyoxalat nach Anspruch 1, wobei die sich wiederholende Einheit in einer Menge von nicht weniger als 90 Mol-% beinhaltet ist.

**Revendications**

1. Polyoxalate contenant, en tant que motif constituant principal, un motif récurrent représenté par la formule (1) :

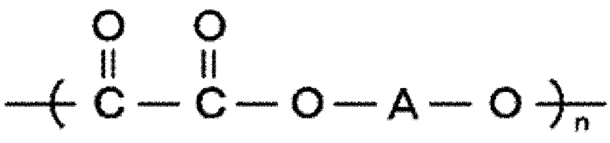
(1)

où

n est un nombre positif, et
A est un groupe organique divalent,

et ayant une quantité de chaleur de fusion ΔHm non inférieure à 60 J/g, telle que mesurée par ACD dans le premier moment d'élévation de la température et telle que calculée par la formule suivante :

$$\Delta Hm = \Delta Hm' - \Delta Hc$$

où

ΔHm' est une quantité de chaleur de fusion (J/g), chaleur de cristallisation incluse, pendant que la température est en élévation,
ΔHc est une quantité de chaleur (J/g) générée par la cristallisation, et
ΔHm est une quantité de chaleur de fusion (J/g), permettant aux composants d'être volatilisés dans une quantité non supérieure à 2,0 % en poids lorsque la température est élevée jusqu'à 200 °C, telle que mesurée par la TGA, et ayant une température de perte de poids de 5 % (Td5%) non supérieure à 230 °C, où :

ΔHm' est mesurée à partir de la zone de pic endothermique de fusion et ΔHc est mesurée à partir de la zone de pic exothermique de cristallisation, lorsque l'ACD est réalisée dans une atmosphère d'azote, par élévation de la température à une vitesse de 10 °C/min et par mesure sur une plage de températures de 0 à 250 °C ; et
la TGA utilisée pour mesure la quantité de composants à volatiliser et la température de perte de poids est réalisée dans une atmosphère d'azote, par élévation de la température à une vitesse de 10 °C/min et par mesure sur une plage de températures de 40 à 300 °C.

**2.** Polyoxalate selon la revendication 1, dans lequel le groupe organique A dans le motif récurrent est un résidu éthylène glycol.

**3.** Polyoxalate selon la revendication 1, dans lequel le motif récurrent est contenu dans une quantité non inférieure à 90 % en mole.

Fig. 1

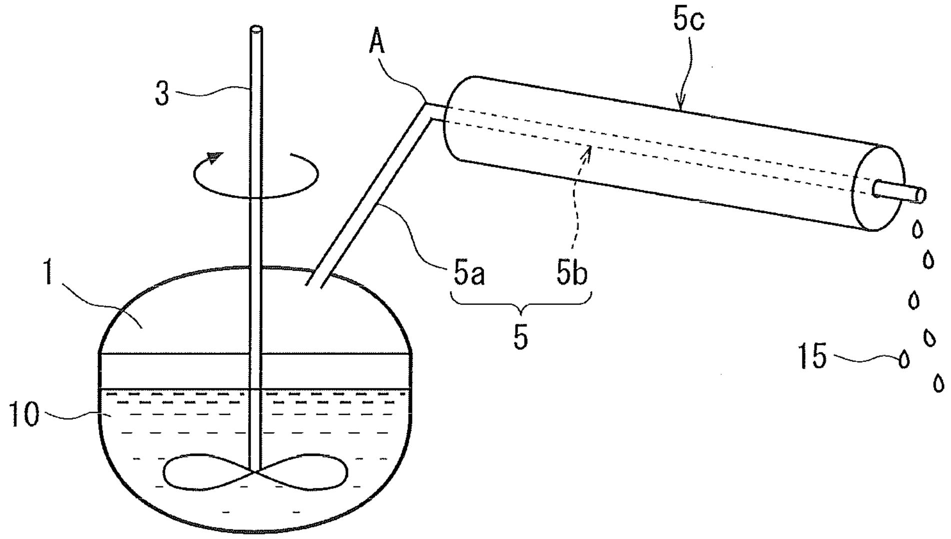
3
A
5c
1
10
5a
5b
5
15

Fig. 2

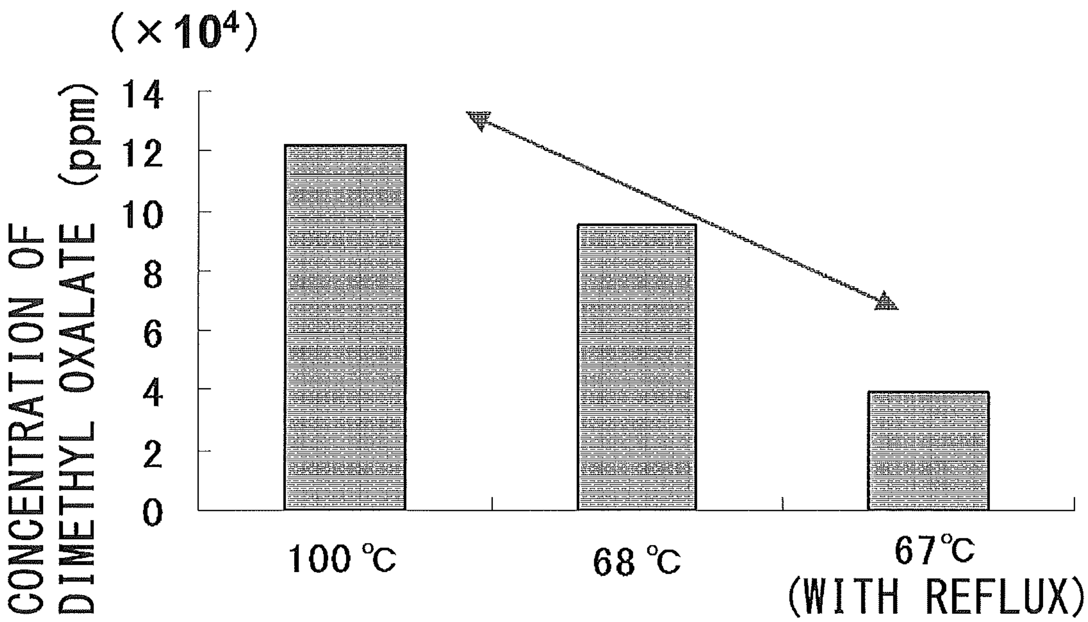
(×10⁴)
CONCENTRATION OF DIMETHYL OXALATE (ppm)
14
12
10
8
6
4
2
0
100 ℃
68 ℃
67℃
(WITH REFLUX)

Fig. 3

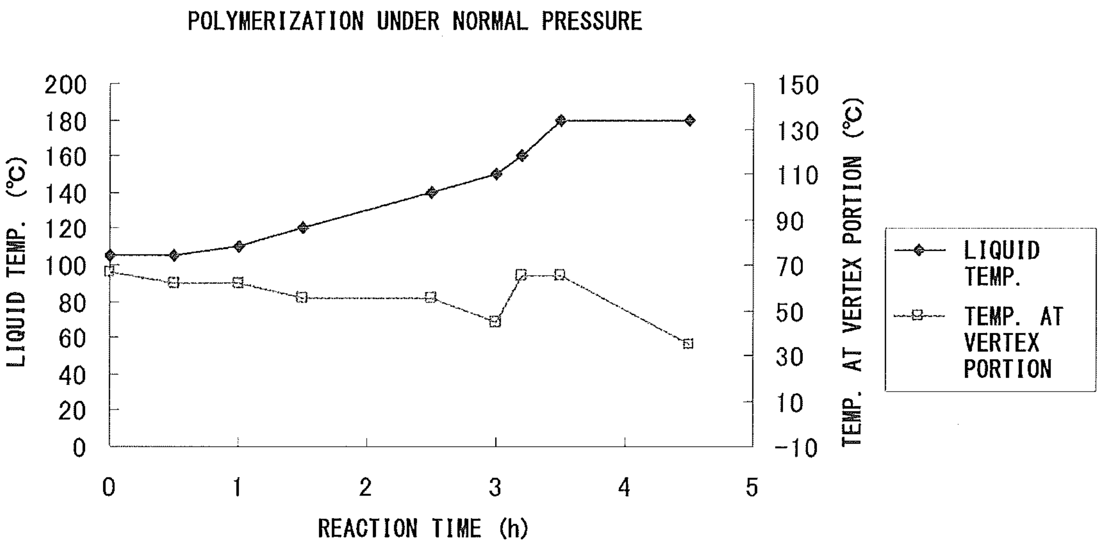
POLYMERIZATION UNDER NORMAL PRESSURE
LIQUID TEMP. (°C)
200
180
160
140
120
100
80
60
40
20
0
TEMP. AT VERTEX PORTION (°C)
150
130
110
90
70
50
30
10
-10
REACTION TIME (h)
0
1
2
3
4
5
LIQUID TEMP.
TEMP. AT VERTEX PORTION

Fig. 4

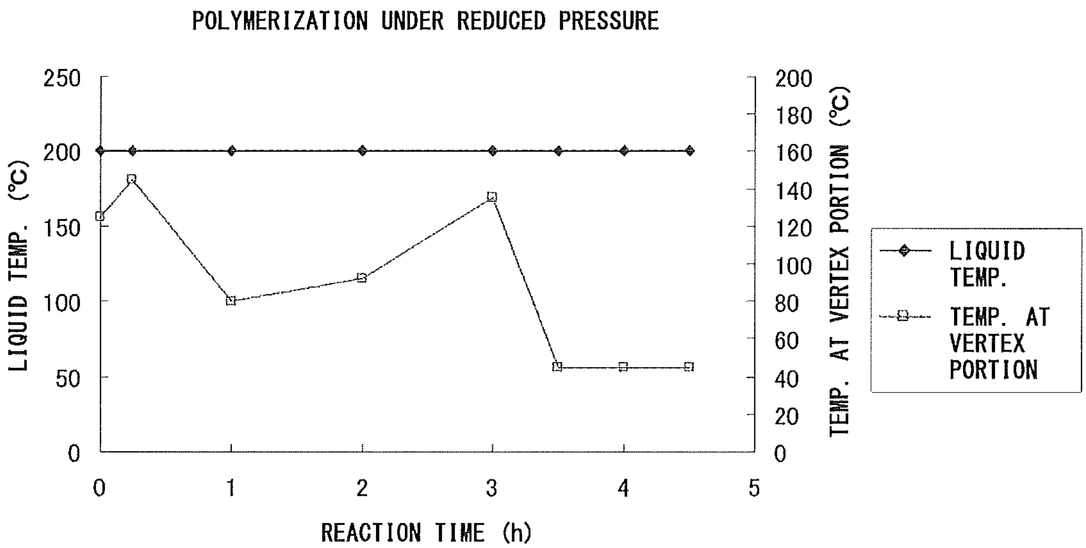
POLYMERIZATION UNDER REDUCED PRESSURE
LIQUID TEMP. (°C)
250
200
150
100
50
0
TEMP. AT VERTEX PORTION (°C)
200
180
160
140
120
100
80
60
40
20
0
REACTION TIME (h)
0
1
2
3
4
5
LIQUID TEMP.
TEMP. AT VERTEX PORTION

Fig. 5

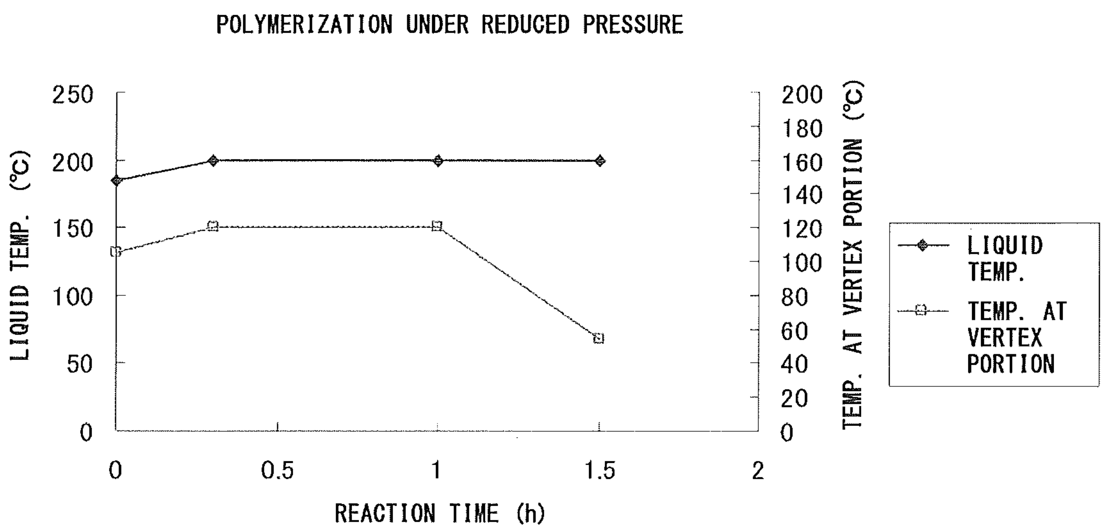
POLYMERIZATION UNDER REDUCED PRESSURE
LIQUID TEMP. (℃)
250
200
150
100
50
0
TEMP. AT VERTEX PORTION (℃)
200
180
160
140
120
100
80
60
40
20
0
0
0.5
1
1.5
2
REACTION TIME (h)
LIQUID TEMP.
TEMP. AT VERTEX PORTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7833950 B
- JP 2014134091 A
- JP 9059359 A
- JP 6145283 A
- JP 3518954 B